# EUROPEAN PATENT SPECIFICATION

(11) **EP 1 110 714 B1**
(45) Date of publication and mention of the grant of the patent: **11.08.2004**
(21) Application number: 99500241.7
(22) Date of filing: 15.12.1999
(51) Int. Cl.: B32B 21/06, A63F 3/00, A63F 9/10

(54) **Laminate material for the manufacture of toys and games**
Mehrschichtmaterial für die Herstellung von Spielzeugen und Spielen
Matériau stratifié pour la fabrication de jouets et de jeux

(43) Date of publication of application: 27.06.2001
(73) Proprietor: Educa Sallent S.A., 08192 Sant Quirze Del Vallès (Barcelona) (ES)
(72) Inventor: Guimerà Ruiz, Francisco Javier, 08041 Barcelona (ES)
(74) Representative: Curell Aguilà, Marcelino

(56) References cited:
- EP-A- 1 101 604
- CA-A- 1 173 869
- CH-A- 679 473
- FR-A- 2 493 222
- GB-A- 1 446 036
- GB-A- 2 094 712
- GB-A- 2 307 882

## Description

The invention relates to a laminate material for the manufacture of toys and games comprising, at least, the layers specified in claim 1.

Laminate materials for the manufacture of toys formed by three plied layers of wood are known. They are used, for example, in the manufacture of puzzles, in which case they usually include a fourth layer, which is a thin sheet on which the puzzle picture has been printed.

A wood regularly used for the manufacture of this laminate material is poplar wood.

Alternatively, the use of a cardboard-based laminate material is known.

It is an object of the invention to provide a laminate material having improved properties over the laminate materials known in the state of the art. This object is achieved by a laminate material of the type first indicated above characterised in that said second layer is cardboard.

Effectively, it is possible in this way to obtain a laminate material having the same advantages as the three-ply wood material, from the point of view of quality, external appearance, etc. It further affords certain advantages over other wood laminates, since it allows for a large reduction of the waste throughout the whole of the production process thereof, while maintaining the possibility of recycling the production excess. It also makes it possible to obtain advantages over cardboard laminates, since the strength thereof in the end use is improved.

In comparison with wood laminates, the second layer of cardboard allows the cutting strength thereof to be improved, without increasing the abrasion, whereby it is also possible to reduce the wear on the die-cutting tools. It also facilitates the rest of the industrial processes required for the conversion thereof into a puzzle or toy, since it affords a constant quality level.

The end product retains an attractive external aspect, thanks to the layer of wood and provides a high quality level in the cut areas, since it is possible to see the structure of the product. This finish also allows the parts of this product to be easily fitted into place by a child, since there is no increase of the friction therebetween, independently of the shape, size or thickness thereof.

A further advantage of this material over the cardboard laminates is that because of the thickness and stability thereof, it is easier for the child to handle the puzzle or game once assembled.

The laminate material of the invention has a third, wooden, layer, in such a way that the second, or cardboard, layer is inserted between two layers of wood. In this way, the properties of the laminate material are much more like those of the three-ply wood material.

The preferred cardboard for the manufacture of the intermediate layer is chipboard, made from new wood fibre, reclaimed fibres, or mixtures thereof. One of the advantages of this cardboard is that the natural colour thereof is very similar to the colour of wood, whereby the aspect thereof, within the laminate material where, in any case only the cut section is seen, is very similar to that of laminate materials made wholly of wood, and it is not necessary to add colouring agents to the cardboard, although, logically, it is possible to add pigments or colouring agents thereto, if desired.

For example in the manufacture of puzzles, a layer of plastified paperboard is added, on which the puzzle picture is printed and which is placed over one of the layers of wood.

The thicknesses of each of the layers are variable, and may be adjusted depending on the requirements of each application (both from the point of view of the client: such as the external aspect, etc., and from the point of view of production (die-cutting difficulty, manipulation, etc.). Preferably the thickness of the layers of wood varies from 0.4 to 2 mm, whereas, the thickness of the cardboard layer is preferably greater than 0.5 mm.

In the majority of applications it is advantageous to stick the layers together by gluing. The adhesive does not require any special features and any of those regularly used for this type of products may be used.

The wood forming the layers of wood is preferably poplar, okume, kalabo, pine or cheese tree.

Further advantages and characteristics of the invention will be appreciated from the following description, in which a preferred embodiment of the invention is described without any limiting nature.

The production process for this material is the same as used for the manufacture of plywood and, therefore, is quite well known to the man of the art. It consists basically of joining the layer of cardboard to that of wood, with the application of any gluing system, with the subsequent application of pressure to ensure the bonding between both elements. In the case of a three-ply element, the process will be continued in the same way, by gluing the second layer of wood on the cardboard. A printed sheet is added using the same system, for example to provide the ensemble with a multicoloured image.

The die-cutting process will also be the same as the one used for the plywood. To this end, a cutting tool or die must be made having the form it is wanted to cut. It is mounted in the corresponding die-cutting machine and the laminate material is inserted therein, to be cut the same way as plywood.

As far as the manufacture of the chip board is concerned, the process therefor is also a conventional, process, known to the man of the art. It is important for the fibre to be new wood or reclaimed. In all other respects, it is a conventional process for a laminated and pressed cardboard, which may be made in one or two layers, composed of mechanical or chemical pulp and containing conventional fillers or additives. The chip board may be made with a rough or smooth surface finish, or both at the same time, and may be glued with hot-melt or cold adhesive.

## Claims

1. Laminate material for the manufacture of toys and games, comprising, at least, a first layer, and a second layer, where said first layer is wood and said second layer is cardboard, **characterised in that** it comprises a third layer, where said third layer is wood, in such a way that said second layer is situated between said first layer and said third layer, and **in that** a fourth layer of printed and plastified paper board is added.

2. Laminate material according to claim 1, **characterised in that** said cardboard layer is chipboard.

3. Laminate material according to one of claims 1 or 2, **characterised in that** the thickness of said first layer ranges from 0.4 to 2 mm.

4. Laminate material according to at least one of claims 1 to 3, **characterised in that** the thickness of said third layer ranges from 0.4 to 2 mm.

5. Laminate material according to at least one of claims 1 to 4, **characterised in that** the thickness of the second layer is greater than 0.5 mm.

6. Laminate material according to at least one of claims 1 to 5, **characterised in that** said layers are joined together by gluing.

7. Laminate material according to at least one of claims 1 to 6, **characterised in that** said first layer is wood obtained from at least one of the trees of the group formed by: poplar, okume, kalabo, pine and cheese tree.

8. Laminate material according to at least one of claims 1 to 7, **characterised in that** said third layer is wood obtained from at least one of the trees of the group formed by: poplar, okume, kalabo, pine and cheese tree.

9. Laminate material according to at least one of claims 1 to 8, **characterised in that** said cardboard is a laminated and pressed cardboard obtained, at least in part, from new wood fibre.

10. Laminate material according to at least one of claims 1 to 9, **characterised in that** said cardboard is a laminated and pressed cardboard obtained, at least in part, from reclaimed wood fibre.

## Patentansprüche

1. Mehrschichtmaterial für die Herstellung von Spielzeugen und Spielen, wobei das Mehrschichtmaterial wenigstens eine erste Schicht und eine zweite Schicht umfasst, wobei die erste Schicht aus Holz und die zweite Schichte aus Pappe besteht, **dadurch gekennzeichnet, dass** das Mehrschichtmaterial eine dritte Schicht umfasst, wobei diese dritte Schicht aus Holz besteht, und zwar derart, dass die zweite Schicht zwischen der ersten Schicht und der dritten Schicht angeordnet ist, und dadurch, dass eine vierte Schicht aus bedrucktem und plastifiziertem Pappmaterial hinzugefügt ist.

2. Mehrschichtmaterial nach Anspruch 1, **dadurch gekennzeichnet, dass** die Schicht aus Pappe aus Graupappe besteht.

3. Mehrschichtmaterial nach Anspruch 1 oder Anspruch 2, **dadurch gekennzeichnet, dass** die Dicke der ersten Schicht zwischen 0.4 und 2 mm beträgt.

4. Mehrschichtmaterial nach wenigstens einem der Ansprüche 1 bis 3, **dadurch gekennzeichnet, dass** die Dicke der dritten Schicht zwischen 0.4 und 2 mm beträgt.

5. Mehrschichtmaterial nach wenigstens einem der Ansprüche 1 bis 4, **dadurch gekennzeichnet, dass** die Dicke der zweiten Schicht mehr als 0.5 mm beträgt.

6. Mehrschichtmaterial nach wenigstens einem der Ansprüche 1 bis 5, **dadurch gekennzeichnet, dass** die Schichten durch Kleben miteinander verbunden werden.

7. Mehrschichtmaterial nach wenigstens einem der Ansprüche 1 bis 6, **dadurch gekennzeichnet, dass** die erste Schicht aus Holz von wenigstens einem der Bäume aus der Gruppe bestehend aus Pappel, Okumebaum, Kalabobaum, Kiefer und amerikaischer Plantane gewonnen wird.

8. Mehrschichtmaterial nach wenigstens einem der Ansprüche 1 bis 7, **dadurch gekennzeichnet, dass** die dritte Schicht aus Holz von wenigstens einem der Bäume aus der Gruppe bestehend aus Pappel, Okumebaum, Kalabobaum, Kiefer und amerikaischer Plantane gewonnen wird.

9. Mehrschichtmaterial nach wenigstens einem der Ansprüche 1 bis 8, **dadurch gekennzeichnet, dass** die Pappe eine laminierte und gepresste Pappe ist, die wenigstens zum Teil aus neuen Holzfasern gewonnen wird.

10. Mehrschichtmaterial nach wenigstens einem der Ansprüche 1 bis 9, **dadurch gekennzeichnet, dass** die Pappe eine laminierte und gepresste Pappe ist, die wenigstens zum Teil aus wieder aufbereiteten Holzfasern gewonnen wird.

## Revendications

1. Matériau stratifié pour la fabrication de jouets ou de jeux, comprenant, au moins, une première couche et une seconde couche, dans lequel ladite première couche est en bois et ladite seconde couche est en carton, **caractérisé en ce qu'**elle comporte une troisième couche, dans lequel ladite troisième couche est en bois, de sorte que ladite seconde couche est située entre ladite première couche et ladite troisième couche, et **en ce qu'**une quatrième couche de carton imprimé et plastifié est ajoutée.

2. Matériau stratifié selon la revendication 1, **caractérisé en ce que** ladite couche de carton est du carton gris.

3. Matériau stratifié selon l'une des revendications 1 ou 2, **caractérisé en ce que** l'épaisseur de ladite première couche est comprise entre 0,4 et 2 mm.

4. Matériau stratifié selon au moins une des revendications 1 à 3, **caractérisé en ce que** l'épaisseur de ladite troisième couche est comprise entre 0,4 et 2 mm.

5. Matériau stratifié selon au moins un des revendications 1 à 4, **caractérisé en ce que** l'épaisseur de la seconde couche est supérieure à 0,5 mm.

6. Matériau stratifié selon au moins une des revendications 1 à 5, **caractérisé en ce que** lesdites couches sont liées ensembles par collage.

7. Matériau stratifié selon au moins une des revendications 1 à 6, **caractérisé en ce que** ladite première couche est en bois obtenu à partir d'au moins un des arbres du groupe constitué par : le peuplier, l'okumé, le kalabo, le pin et le fromager.

8. Matériau stratifié selon au moins une des revendications 1 à 7, **caractérisé en ce que** ladite troisième couche est en bois obtenu à partir d'au moins un des arbres du groupe constitué par : le peuplier, l'okumé, le kalabo, le pin et le fromager.

9. Matériau stratifié selon au moins une des revendications 1 à 8, **caractérisé en ce que** ledit carton est un carton stratifié et pressé obtenu, au moins partiellement, à partir de fibres de bois neuves.

10. Matériau stratifié selon au moins une des revendications 1 à 9, **caractérisé en ce que** ledit carton est un carton stratifié et pressé obtenu, au moins partiellement, à partir de fibres de bois recyclées.
